# EUROPEAN PATENT SPECIFICATION

(11) **EP 3 685 903 B1**
(45) Date of publication and mention of the grant of the patent: **09.02.2022**
(21) Application number: 19798514.6
(22) Date of filing: 25.10.2019
(51) Int. Cl.: B01D 46/00, F24F 13/28

(54) **FILTER SCREEN CLEANING MODULE AND AIR TREATMENT DEVICE**
FILTERSIEBREINIGUNGSMODUL UND LUFTBEHANDLUNGSVORRICHTUNG
MODULE DE NETTOYAGE D'ÉCRAN DE FILTRE ET DISPOSITIF DE TRAITEMENT D'AIR

(30) Priority: 30.11.2018 CN 201822009139 U
(43) Date of publication of application: 29.07.2020
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: PENG, Jielin, Foshan, Guangdong 528311 (CN); LIU, Qiwei, Foshan, Guangdong 528311 (CN)
(74) Representative: Lam, Alvin
(86) International application number: PCT/CN2019/113330
(87) International publication number: WO 2020/108191

(56) References cited:
- CN-A- 106 016 679
- CN-A- 108 105 867
- CN-A- 108 679 825
- CN-U- 206 959 172
- CN-U- 208 012 056
- CN-U- 208 042 308
- CN-U- 209 173 592
- CN-U- 209 181 119
- CN-U- 209 181 120
- CN-U- 209 181 121
- JP-A- 2011 149 683
- JP-A- 2012 154 589

## Description

### FIELD

The present application relates to a technical field of household appliances, and in particular, to a filter screen cleaning module and an air processing device.

### BACKGROUND

In an air conditioner, usually, a filter is provided at an air inlet or an air outlet to filter. In the long-term use, much dust would be accumulated on the filter. It takes time and effort to remove and wash the filter manually, and a filter assembly is easily damaged.

Therefore, more and more air conditioners are equipped with an automatic filter cleaning assembly. Some use a brush to rollably clean a surface of the filter, while some use a solution spray to clean the surface of the filter. However, when the filter is washed by the brush a dedusting mechanism of the brush tends to sway back and forth during work, and the working stability is poor. Moreover, more residual hair tends to be present on the brush surface after long-term use, thereby reducing the brush cleaning efficiency. When the filter is cleaned by the solution spray, the parts around the filter are easily sprayed, the dirty water after the filter is washed may not be recycled, the water consumption is large, and the filter may be cleaned with dead angle.

JP 2012/154589 discuses an air conditioner which aims to guide, and collect dust into a dust box.

### SUMMARY

Aspects of the present invention are defined by the accompanying claims. According to a first aspect there is provided a filter screen cleaning module in accordance with claim 1. According to a second aspect there is provided an air processing device in accordance with claim 9. Further preferred optional features are defined in the dependent claims.

The present application seeks to solve at least one of the problems existing in the related art to at least some extent.

To this end, an object of the present application is to provide a filter screen cleaning module which has stable working performance, is prevented from shaking, and has good filter cleaning effects.

Another object of the present application is to provide an air processing device having the above-mentioned filter screen cleaning module.

The filter screen cleaning module according to an embodiment of the present application includes: a cleaning box, having a cleaning cavity, a shaft hole being provided in a box wall of the cleaning box; a screen brush assembly, rollably connected between two opposite box walls of the cleaning box, configured to remove impurities on a filter screen, and having at least one end surface provided with an end hole; a screen brush drive gear, located outside the cleaning box to be connected with a power source, and coaxially provided with a screen brush connecting shaft, the screen brush connecting shaft passing through the shaft hole into the end hole and configured to rotate synchronously with the screen brush assembly.

In the filter screen cleaning module according to an embodiment of the present application, the screen brush assembly is rollable with respect to the cleaning box, and may contact different parts of the filter to realize the function of cleaning the filter; the impurities and dust when the screen brush assembly is rolling to clean the filter may be collected by the cleaning box, and less dust is raised. The cleaning box provides an overall connection position for the screen brush assembly, such that the screen brush assembly is rotated along a fixed rotating shaft, has a small offset, and is prevented from shaking when rolling in the cleaning box, which facilitates realization of the cleaning function. The screen brush drive gear is arranged outside the cleaning box, separately from the screen brush assembly, easy to be mounted. The screen brush drive gear is prevented from damaging the filter when arranged in the cleaning box and cleaning the filter. In addition, dust accumulation on the screen brush drive gear is avoided during cleaning, and the service life of the screen brush drive gear is prolonged.

Optionally, the screen brush connecting shaft is provided with an elastic buckle snapped in the end hole.

Optionally, the screen brush connecting shaft is provided with a flat portion, and the end hole is formed into a shape fitted with the screen brush connecting shaft.

Optionally, the screen brush assembly includes: a screen brush inner shaft, having two ends connected between the two opposite side walls of the cleaning box, the end hole being provided in an end surface of the screen brush inner shaft; and a screen brush body, provided on a peripheral wall of the screen brush inner shaft, and configured to contact the filter screen.

Optionally, the screen brush body is formed into a cylindrical shape and fitted over the screen brush inner shaft, or the screen brush body in a sheet shape is bent and wrapped around the peripheral wall of the screen brush inner shaft.

Optionally, the screen brush inner shaft includes: an inner shaft lower cover, formed in an elongated shape, provided with an inner shaft notch, and having a first end formed with an engagement shaft; and an inner shaft upper cover, formed in an elongated shape, disposed at the inner shaft notch, cooperating with a second end of the inner shaft lower cover to form the end hole, the screen brush connecting shaft passing through the inner shaft lower cover and being connected with the inner shaft upper cover. The shaft hole is arranged in each of the two opposite side walls of the cleaning box, and the engagement shaft is inserted into one of the shaft holes.

Optionally, an anti-rotation block is arranged at each of two ends of the inner shaft upper cover in a length direction, and an inner wall of the inner shaft notch is provided with a corresponding anti-rotation groove.

Optionally, the cleaning box is provided with a water inlet, the bottom of the cleaning box is provided with a water outlet in communication with the cleaning cavity, the water inlet is arranged toward the screen brush assembly, and/or at least a part of the screen brush assembly is immersed in the cleaning cavity.

An air processing device according to an embodiment of the present application includes: the above-mentioned filter screen cleaning module.

The air processing device according to an embodiment of the present application is provided with the above-mentioned filter screen cleaning module, which may clean the parts of the filter. Moreover, the filter screen cleaning module works stably when cleaning, has less offset, is prevented from being disengaged and may better clean the filter.

Optionally, the air processing device is configured as an indoor unit of an air conditioner, the filter screen cleaning module is connected on a chassis of the indoor unit of the air conditioner, and the filter screen cleaning module is located above a drain pan of the indoor unit of the air conditioner.

Additional aspects and advantages of the present application will be given in part in the following descriptions, become apparent in part from the following descriptions, or be learned from the practice of the embodiments of the present disclosure.

### BRIEF DESCRIPTION OF THE DRAWINGS

Fig. 1 is a schematic diagram of an overall structure of a filter screen cleaning module according to an embodiment of the present application.
Fig. 2 is schematic diagram of a partial structure of an air processing device provided with the filter screen cleaning module according to an embodiment of the present application.
Fig. 3 is a schematic diagram of an exploded structure of the filter screen cleaning module according to an embodiment of the present application.
Fig. 4 is a schematic diagram of a structure of a screen brush assembly cooperating with the filter according to an embodiment of the present application.
Fig. 5 is a schematic diagram of an overall structure of the screen brush assembly and a screen brush drive gear according to an embodiment of the present application.
Fig. 6 is a schematic diagram of an exploded structure of the screen brush assembly and the screen brush drive gear according to an embodiment of the present application.
Fig. 7 is a schematic structural diagram of a longitudinal section of Figure 5.
Fig. 8 is a schematic diagram of a structure of the screen brush assembly cooperating with a roller gear and a power assembly according to an embodiment of the present application.
Fig. 9 is a schematic diagram of a structure of a cleaning box cooperating with the screen brush assembly according to an embodiment of the present application.
Fig. 10 is a schematic diagram of an exploded structure of a roller assembly according to an embodiment of the present application.
Fig. 11 is a schematic diagram of an overall structure of a chip filter member according to an embodiment of the present application.
Fig. 12 is schematic diagram of an overall structure of a dedusting member and the chip filter member according to an embodiment of the present application.

Reference numerals:
air processing device 1000;
filter screen cleaning module 100;
   cleaning box 1; cleaning cavity 101; shaft hole 104; water inlet 105; water outlet 106; support wall 107;
   power assembly 2; cleaning motor 201; roller drive gear 203;
   screen brush assembly 3; end hole 301; inner shaft notch 302; anti-rotation groove 303; engagement shaft 304; anti-rotation block 305;
      screen brush inner shaft 310; inner shaft lower cover 311; inner shaft upper cover 312;
      screen brush body 320;
   screen brush drive gear 4; screen brush connecting shaft 410; elastic buckle 411; flat portion 412;
   dedusting member 5; comb teeth 51;
   roller assembly 6;
      filter screen drive gear 61; insertion portion 611; socket 612;
      flexible contact drive portion 62; flexible edges 621;
      inner shaft 63 of the roller; inner projection 631;
      rotation limiting structure 64; rotation limiting groove 641; rotation limiting projection 642
      filter screen raceway 65;
   gear cover 7; first transmission gear 71; second transmission gear 72;
   chip filter member 8; grating plate 81; top guide plate 82; snap-in portion 83; water hole 84; abutting block 85; connecting plate 86;
   water inlet pipe 91; water pump assembly 92; water outlet control valve 93; drain pipe 94;
casing 200; air inlet 210; chassis 220; back plate 221; bottom plate 222;
drain pan 300;
filter screen 400; rib-like protrusion 401

### DETAILED DESCRIPTION

Reference will be made in detail to embodiments of the present application, and the examples of the embodiments are illustrated in the drawings, wherein the same or similar elements and the elements having same or similar functions are denoted by like reference numerals throughout the descriptions. The embodiments described herein with reference to drawings are illustrative, and merely used to explain the present application. The embodiments shall not be construed to limit the present application.

The filter screen cleaning module 100 according to an embodiment of the present application will be described in detail below with reference to the drawings.

A filter screen cleaning module 100 according to an embodiment of the present application includes a cleaning box 1, a screen brush assembly 3, and a screen brush drive gear 4.

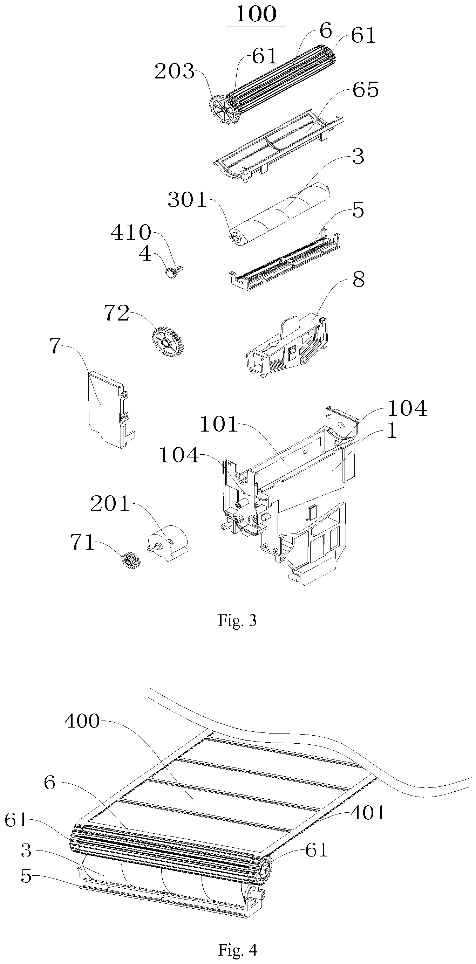

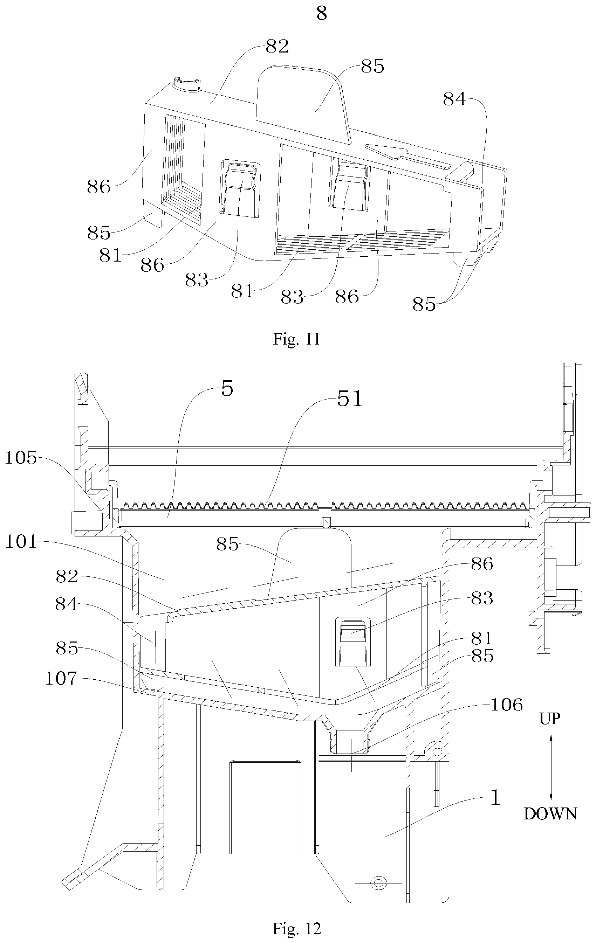

As shown in Figs. 3 and 12, the cleaning box 1 has a cleaning cavity 101, and a shaft hole 104 is arranged on a box wall of the cleaning box 1. The cleaning cavity 101 has a certain accommodation space, and may accommodate a cleaning assembly and prevent dust from scattering in all directions.

As shown in Figs. 3-9, the screen brush assembly 3 is rollably connected between the two opposite box walls of the cleaning box 1, for removing impurities on the filter screen 400. The screen brush assembly 3 may be located in the cleaning cavity 101, or above the cleaning cavity 101. When the screen brush assembly 3 is rolling to remove dust, the dust thereon is moved outwards due to a centrifugal force, and the screen brush assembly 3 has a function of self cleaning. In addition, the end hole 301 is arranged on at least one end surface of the screen brush assembly 3. That is, the end hole 301 is arranged at one end of the screen brush assembly 3, or at each of two axial ends of the screen brush assembly 3.

It should be noted that unless specified or limited otherwise, the terms "coupled", "mounted" and "connected" mentioned below, and the like are used broadly, and may be, for example, fixed connections, detachable connections, or integral connections; may also be mechanical or electrical connections; may also be direct connections or indirect connections via intervening structures; may also be inner communications of two elements. The above terms will be understood by those skilled in the art according to specific situations.

As shown in Figs. 3, 5 to 9, the screen brush drive gear 4 is located outside the cleaning box 1 to connect a power source, and is coaxially provided with the screen brush connecting shaft 410 which passes through the shaft hole 104 into the end hole 301 and is rotated synchronously with the screen brush assembly 3. Driven by the power source, the screen brush drive gear 4 is rotated, and the power is transmitted onto the screen brush connecting shaft 410 and the screen brush assembly 3 successively to provide continuous power for the rolling movement of the screen brush assembly 3.

In the filter screen cleaning module 100 according to the present embodiment of the present application, the cleaning box 1 provides an overall connection position for the screen brush assembly 3, and effectively positions the screen brush assembly 3, such that the screen brush assembly 3 is limited within a certain space when moving. When rolling in the cleaning box 1, the screen brush assembly 3 is rotated along a fixed rotating shaft, has a small offset, is prevented from shaking, and operates stably, which facilitates realization of the cleaning function.

The screen brush assembly 1 is rollable with respect to the cleaning box 1. When the screen brush assembly 1 is rolling, different parts thereof contact the filter screen 400, enhancing the overall effect of cleaning the filter screen 400.

When the screen brush assembly 3 is rolling continuously, the dust thereon generates a certain centrifugal force, such that the dust from the filter screen 400 falls into the cleaning chamber 101. The impurities and dust when the screen brush assembly is rolling to clean the filter may be collected by the cleaning box 1, and less dust is raised.

The screen brush drive gear 4 is arranged outside the cleaning box 1, separately from the screen brush assembly 3, facilitating the mounting convenience. In addition, the screen brush drive gear 4 is arranged externally, which prevents the screen brush drive gear 4 from damaging the filter screen 400 when arranged in the cleaning box 1 and cleaning the filter, avoids dust accumulation on the screen brush drive gear 4 during cleaning, and prolongs the service life of the screen brush drive gear 4.

In the description of the present application, it will be understood that terms such as "longitudinal", "length", "upper", "lower", "front", "rear", "left", "right", "top", "bottom", "inner", "outer", "axial" and "circumferential" should be construed to refer to the orientation as then described or as shown in the drawings under discussion. These relative terms are for convenience of description and do not require that the present application be constructed or operated in a particular orientation, thus cannot be construed to limit the present application.

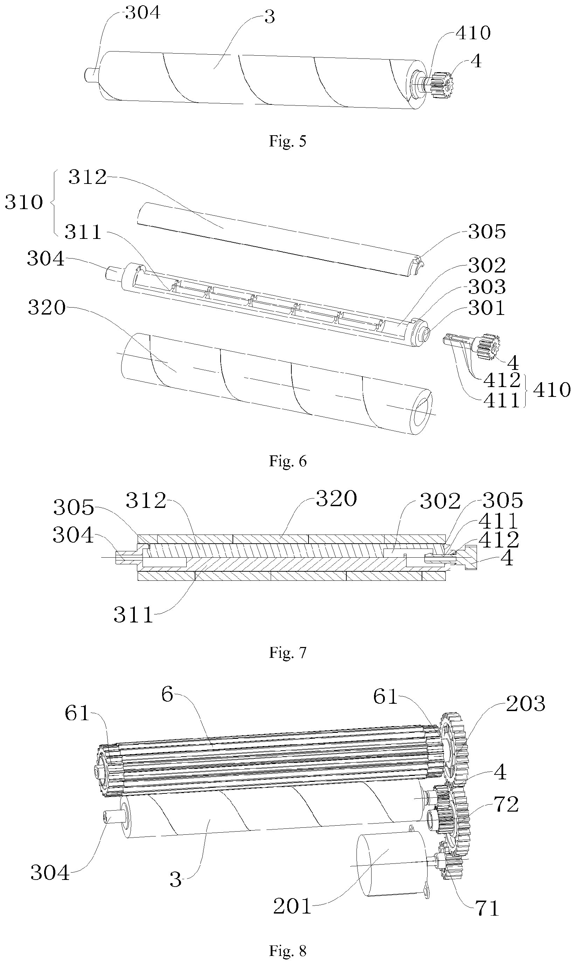

In some embodiments of the present application, as shown in Figs. 6 and 7, the screen brush connecting shaft 410 is provided thereon with an elastic buckle 411 snapped in the end hole 301. The elastic buckle 411 has a certain elastic deformation force, which enables the elastic buckle 411 snapped into and detached from the end hole 301 conveniently, thereby facilitating the disassembly and assembly.

In some embodiments of the present application, as shown in Figs. 6 and 7, the screen brush connecting shaft 410 is provided with a flat portion 412, and the end hole 301 is formed in a shape matching the screen brush connecting shaft 410. The arrangement of the flat portion 412 may increase the fitness of the screen brush connecting shaft 410 and the end hole 301, and better realize the limit to the screen brush connecting shaft 410, avoiding the situation where the screen brush connecting shaft 410 is rotated without driving the screen brush assembly 3 to rotate, which facilitates the transmission of the power and the stable rotation of the screen brush assembly 3.

In some examples of the present application, the screen brush connecting shaft 410 is provided thereon with the above-mentioned elastic buckle 411 and the flat portion 412 at the same time. When the screen brush drive gear 4 with the flat portion 412 is pushed from the shaft hole 104 and the end hole 301, the elastic buckle 411 is buckled up on the inner end surface of the screen brush assembly 3, such that the axial endplay of the screen brush assembly 3 when rolling is limited.

In the present application, as shown in Figs. 3-9, the screen brush assembly 3 includes: a screen brush inner shaft 310 and a screen brush body 320.

The two ends of the screen brush inner shaft 310 are connected between the two opposite side walls of the cleaning box 1, and the end hole 301 is disposed on the end surface of the screen brush inner shaft 310.

The screen brush body 320 is disposed on the peripheral wall of the screen brush inner shaft 310, for contacting the filter screen 400. The screen brush body 320 directly contacts the filter screen 400, for better cleaning the filter screen 400.

Advantageously, the screen brush body 320 is formed in a cylindrical shape, and the screen brush inner shaft 310 is sleeved with the screen brush body 320. The cylindrical screen brush body 320 is easily disassembled from and assembled with the screen brush inner shaft 310 and is replaced conveniently.

Advantageously, the screen brush body 320 is formed in a sheet-like shape and wrapped around the peripheral wall of the screen brush inner shaft 310, which facilitates manufacturing, makes the connection between the assembled screen brush body 320 and the screen brush inner shaft 310 closer, and avoids the offset of the screen brush body 320 on the screen brush inner shaft 310 when the screen brush assembly 3 is rolling.

Specifically, the screen brush body 320 is configured as a layer of carpet with filament fiber, and is connected with the screen brush inner shaft 310 integrally by adhesive.

Optionally, the screen brush body 320 may also be configured as a flexible cylinder with a layer of filament, and the screen brush inner shaft 310 is sleeved with the flexible cylinder.

Optionally, the screen brush body 320 may also be configured as a cleaning body with smooth fine bristles on the surface.

In the present application, as shown in Figs. 6 and 7, the screen brush inner shaft 310 includes an inner shaft lower cover 311 and an inner shaft upper cover 312.

The inner shaft lower cover 311 is formed in an elongated shape, the inner shaft lower cover 311 is provided thereon with an inner shaft notch 302, and one end of the inner shaft lower cover 311 is formed with an engagement shaft 304.

Correspondingly, the inner shaft upper cover 312 is formed in an elongated shape, the inner shaft upper cover 312 is disposed at the inner shaft notch 302, and the inner shaft upper cover 312 is fitted with the other end of the inner shaft lower cover 311 to form the end hole 301.

The screen brush connecting shaft 410 passes through the inner shaft lower cover 311 and is connected with the inner shaft upper cover 312.

The elongated inner shaft lower cover 311 and the inner shaft upper cover 312 are fitted integrally to support the screen brush body 320 together.

Since the screen brush inner shaft 310 supports the screen brush body 320 to clean the filter screen 400, and the screen brush inner shaft 310 is subjected to a relatively large tangential force and a bending moment, it is necessary to strengthen the structural strength and rigidity of the screen brush inner shaft 310. The screen brush inner shaft 310 is divided into the inner shaft lower cover 311 and the inner shaft upper cover 312 which are connected with each other to improve the structural strength and rigidity of the screen brush inner shaft 310, and a reinforcing structure, such as a reinforcing rib, is processed on the inner shaft lower cover 311 and the inner shaft upper cover 312 much more easily. In addition, the inner shaft lower cover 311 and the inner shaft upper cover 312 which are separately designed enable the screen brush connecting shaft 410 to be snapped at a desired position more easily, thereby facilitating the reliability of the overall assembly.

Optionally, the inner shaft lower cover 311 and the inner shaft upper cover 312 are integrally formed in a detachable connection manner, such as an engagement hole, a screw, or the like.

Optionally, the inner shaft lower cover 311 and the inner shaft upper cover 312 are integrally formed by welding (such as ultrasonic welding) and gluing.

Optionally, as shown in Fig. 3, a shaft hole 104 is arranged on each of the two opposite side walls of the cleaning box 1, the engagement shaft 304 is inserted into one of the shaft holes 104, and the screen brush connecting shaft 410 is fitted and connected in the other shaft hole 104, such that the screen brush assembly 3 is stably connected on the cleaning box 1 to avoid shaking during the cleaning operation.

In some advantageous implementations of the present application, as shown in Figs. 6 and 7, an anti-rotation block 305 is arranged at each of two ends of the inner shaft upper cover 312 in the longitudinal direction, and the inner wall of the inner shaft notch 302 is provided thereon with the corresponding anti-rotation groove 303. The anti-rotation block 305 and the anti-rotation groove 303 are fitted to further increase the limit between the inner shaft lower cover 311 and the inner shaft upper cover 312, such that the inner shaft lower cover 311 and the inner shaft upper cover 312 are less likely to rotate after assembled.

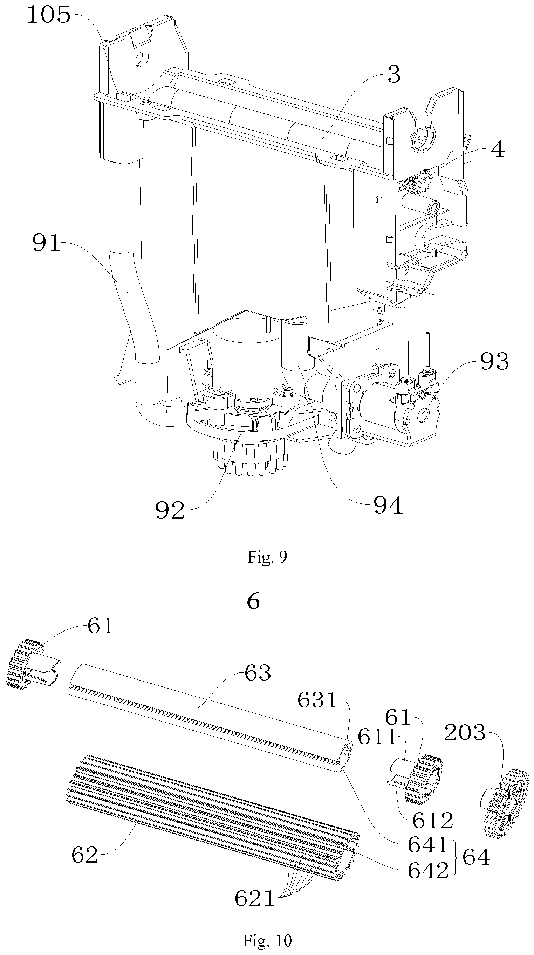

In some embodiments of the present application, as shown in Figs. 9 and 12, the cleaning box 1 is provided thereon with a water inlet 105, and the water outlet 106 which is communicated with the cleaning cavity 101 is arranged at the bottom of the cleaning box 1. Herein, washing liquid is introduced or discharged from the water inlet 105 and the water outlet 106 respectively.

Optionally, the water inlet 105 is disposed toward the screen brush assembly 3, and the screen brush assembly 3 is disposed at an upper portion of the cleaning cavity 101. At this point, water may be sprayed from the water inlet 105 to the side surface of the screen brush assembly 3, so as to wet the screen brush assembly 3, clean off the dust on the screen brush assembly 3, and improve the ability of the screen brush assembly 3 to clean the filter screen 400.

Optionally, the water inlet 105 is disposed at an upper portion of the cleaning cavity 101 and water is sprayed toward the screen brush assembly 3. At this point, the water in the water inlet 105 is sprayed from the upper portion onto the screen brush assembly 3, and the clean water is first sent to the contact portion of the screen brush assembly 3 and the filter screen 400, greatly improving the ability of cleaning the filter screen 400 (filter screen 400, as shown in Fig. 4).

Optionally, at least a portion of the screen brush assembly 3 is immersed within the cleaning cavity 101. When the portion of the screen brush assembly 3 is immersed in the cleaning cavity 101, dirty water on the screen brush assembly 3 may fall in the cleaning cavity 101 accurately, without spilling. In addition, when the water level in the cleaning cavity 101 rises to the screen brush assembly 3, the screen brush assembly 3 immersed in the water may be washed again.

Optionally, the water inlet 105 is disposed toward the screen brush assembly 3, and the screen brush assembly 3 is immersed in the cleaning cavity 101. When the water level in the cleaning cavity 101 rises high and the top of the screen brush assembly 3 is immersed, the screen brush assembly 3 may be washed in all directions.

In some embodiments of the present application, as shown in Figs. 3, 4 and 12, a dedusting member 5 is arranged below the screen brush assembly 3, and is provided thereon with a toothed plate which is in contact with the screen brush assembly 3. Comb teeth 51 are provided on the toothed plate, and both ends of the dedusting member 5 are snapped in the cleaning box 1. The dedusting member 5 may comb the impurities, such as hair on the cleaning box 1, into the cleaning cavity 101, thereby increasing the cleaning effect of the screen brush assembly 3.

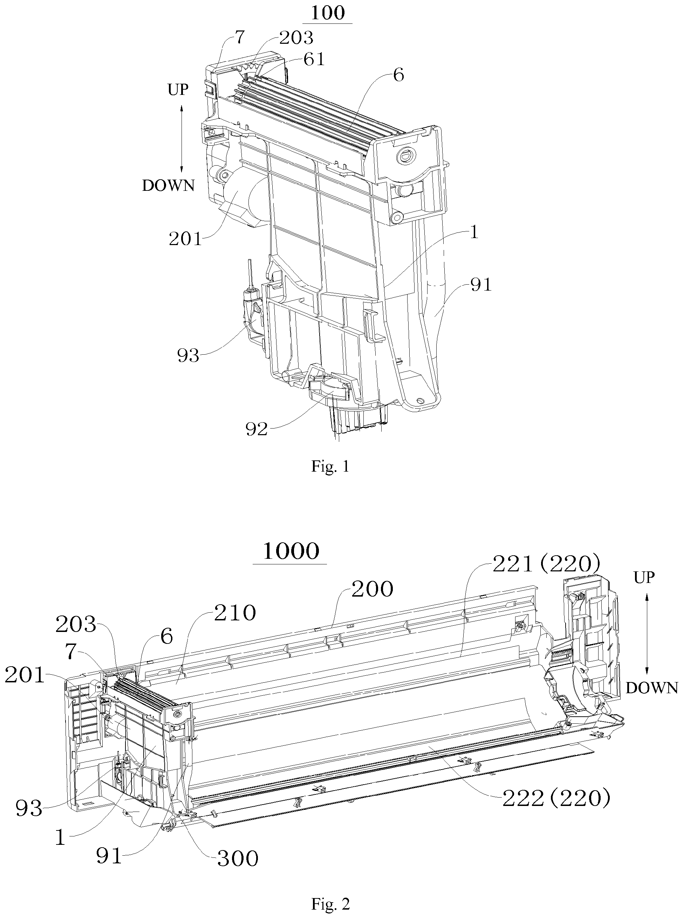

In some embodiments of the present application, as shown in Figs. 1-4, 8, and 10, the roller assembly 6 is rollably connected between two opposite side walls of the upper portion of the cleaning box 1. The roller assembly 6 includes a filter screen drive gear 61 and a flexible contact drive portion 62, wherein the filter drive gear 6 is configured for being engaged with the filter screen 400 to drive the filter screen 400 to move, and the flexible contact drive portion 62 is configured for flexibly contacting with the filter screen 400 to drive the filter screen 400 to move. The flexible contact drive portion 62 supports, guides and buffers the filter screen 400 to some extent, prevents the filter screen 400 from being damaged during movement, and avoids offset of the filter screen 400 when moving.

As shown in Figs. 1, 2, 3, 8, and 10, the roller drive gear 203 is disposed on the cleaning box 1 and connected with the roller assembly 6. The roller drive gear 203 may transmit external power to the filter screen drive gear 61 and the entire roller assembly 6, such that the roller assembly 6 is rollable.

Advantageously, the flexible contact drive portion 62 has a Shore hardness of 30 to 70, ensuring smooth movement of the filter screen 400 and reducing abnormal noise during the movement.

Optionally, as shown in Fig. 10, the roller assembly 6 includes: an inner shaft 62 of the roller, the end portion of which is connected with the filter screen drive gear 61; and a flexible contact drive portion 62, with which the inner shaft 63 of the roller is sleeved, wherein a rotation limiting groove 641 is arranged on an outer peripheral wall of the inner shaft 63 of the roller, a rotation limiting projection 642 is arranged on an inner peripheral wall of the flexible contact drive portion 62, and the rotation limiting projection 642 is inserted and fitted in the rotation limiting groove 641. The rotation limiting groove 641 and the rotation limiting projection 642 form a rotation limiting structure 64 which improves the assembly position fixity between the inner shaft 63 of the roller and the flexible contact drive portion 62, and avoids the circumferential displacement between the inner shaft 63 of the roller and the flexible contact drive portion 62.

Optionally, as shown in Fig. 10, the inner shaft 63 of the roller is formed in a hollow cylindrical shape. A part of the peripheral wall of the inner shaft 63 of the roller is recessed inwards to form the rotation limiting groove 641, and the portion of the inner peripheral wall of the inner shaft 63 of the roller forming the rotation limiting groove 641 is configured as an inner projection 631. The filter screen drive gear 61 is provided thereon with an insertion portion 611 inserted in the inner shaft 63 of the roller, and the insertion portion is snapped on the inner projection 631. The cooperation of the insertion portion 611 and the inner projection 631 may increase the connection stability between the filter screen drive gear 61 and the inner shaft 63 of the roller, such that they are rotated synchronously, which prevents the circumferential displacement between the filter screen drive gear 61 and the inner shaft 63 of the roller, and prevents the filter screen drive gear 61 from being idling.

Specifically, as shown in Fig. 10, the insertion portion 611 is provided thereon with a socket 612 in the axial direction, and the socket 612 is snapped on the inner projection 631.

Optionally, as shown in Fig. 4, a rib-like protrusion 401 fitted with the filter screen drive gear 61 is arranged at the bottom of the filter screen 400.

Optionally, as shown in Fig. 10, the flexible contact drive portion 62 is provided thereon with a plurality of flexible edges 621 which extend in the axial direction of the roller assembly 6, and are disposed in one-to-one correspondence to the teeth on the filter screen drive gear 61. In this way, the filter screen 400 is driven by the filter screen drive gear 61 and the flexible contact drive portion 62, and the rib-like protrusion 401 on the filter screen 400 is snapped in the groove between the flexible edges 621, such that the filter screen 400 is not offset in the left and right direction when rotating, and is synchronous with the roller assembly 6 when rotating.

As shown in Fig. 3, a filter screen raceway 65 is provided below the roller assembly 6, the filter screen raceway 65 half surrounding the lower portion of the roller assembly 6 and being formed as a curved plate. The middle of the filter screen raceway 65 is hollowed out, with a contact gap. The filter screen raceway 65 may guide the movement of the filter screen 400, such that the filter screen 400 may return to a filter position in time after washed. The hollow design easily forms better contact between the lower portion of the roller assembly 6 and the screen brush assembly 3 as well as the filter screen 400 rotated to the lower portion and the screen brush assembly 3 to facilitate dust removal.

In some embodiments of the present application, as shown in Figs. 3, 11, and 12, a fixed position is arranged on the inner wall of the cleaning cavity 101 in the cleaning box 1, and the chip filter member 8 is located below the dedusting member 5. The chip filter member 8 is provided thereon with a grating plate 81 for blocking the flow of impurities in the water toward the water outlet 106. The chip filter member 8 is provided thereon with a snap-in portion 83 snapped at a fixed position. The chip filter member 8 may filter impurities in the dirty water from the screen brush assembly 3, such as hair, to prevent impurities from clogging the water outlet 106.

Optionally, as shown in Fig. 11, the snap-in portion 83 is configured as an elastic fastener, and each of the two opposite sides of the chip filter member 8 is provided with the elastic fastener. Correspondingly, the inner wall of the cleaning cavity 101 is also provided with two fixed positions which cooperate with the snap-in portion 83. The elastic fastener is easy to mount and has a certain elastic restoring force. After the chip filter member 8 is mounted in the cleaning cavity 101, the elastic force of the elastic fastener may also support the inner wall of the cleaning box 1, effectively preventing the chip filter member 8 from shaking.

Optionally, as shown in Fig. 11, the chip filter member 8 further includes: a top guide plate 82, disposed obliquely, connected above the grating plate 81, and contacting the inner wall of the cleaning cavity 101 on all four sides in the circumferential direction. The inclined top guide plate 82 may guide the dirty water after the screen brush assembly 3 is washed, such that the dirty water flows downwards along the top guide plate 82 to prevent the dirty water from splashing around in the cleaning cavity 101.

In addition, as shown in Fig. 11, the top guide plate 82 is provided with a water hole 84 penetrating therethrough vertically. The water hole 84 may introduce the dirty water from the top guide plate 82 to the grating plate 81.

Optionally, as shown in Figs. 11 and 12, the grating plate 81 includes three sections which are connected foldably, wherein the two sections are located directly below the top guide plate 82 and form the bottom wall of the chip filter member 8, and the third section is bent upwards from the bottom wall of the chip filter member 8 to connect the top guide plate 82. The two sections of the grating plate 81 forming the bottom wall extend downwards in a direction towards each other, and the water outlet 106 is located below a joint of the two sections of the grating plate 81 forming the bottom wall. The water filtered by the grating plate 81 is collected to the water outlet 106 and then discharged.

Optionally, as shown in Fig. 11, a plurality of connecting plates 86 are connected between the top guide plate 82 and the grating plate 81. A cutout is provided on the connecting plate 86, and the snap-in portion 83 is connected on the inner wall of the cutout. The connecting plate 86 enhances the structural strength of the chip filter member 8 as a whole, preventing excessive dirty water from directly passing through the side wall of the chip filter member 8.

Optionally, as shown in Figs. 11 and 12, an abutting block 85 is arranged at the top and bottom of the chip filter member 8 respectively. The top abutting block 85 abuts against the dedusting member 5, and the bottom abutting block 85 abuts against the inner wall of the cleaning box 1.

Correspondingly, the cleaning box 1 is provided therein with a support wall 107 fitted with the two sections of the grating plate 81 at the bottom, and the bottom abutting block 85 abuts against the support wall 107.

In some embodiments of the present application, as shown in Figs. 1, 2, 3, and 8, a cleaning motor 201 is used as the power source, the cleaning motor 201 drives the first transmission gear 71 to rotate, the first transmission gear 71 drives the second transmission gear 72 to rotate, and the second transmission gear 72 simultaneously drives the screen brush drive gear 4 and the roller drive gear 203 to rotate. At the same time, the screen brush drive gear 4 transmits power to the screen brush assembly 3 through the screen brush connecting shaft 410, such that the screen brush assembly 3 is rotated; the roller drive gear 203 drives the filter screen drive gear 61 to rotate coaxially, so as to drive the flexible contact drive portion 62, or the like to rotate, and the filter screen 400 is also driven by the filter screen drive gear 61 and the flexible contact drive portion 62 to rotate. Therefore, in the contact surface of the filter screen 400 and the screen brush assembly 3, the tangential speeds of the filter screen 400 and the flexible contact drive portion 62 are opposite, which facilitates the screen brush assembly 3 to better clean the filter screen 400. It should be noted that the feature defined with "first" and "second" may include one or more of this feature explicitly or implicitly, for distinguishing between described features, regardless of order and importance.

It is appreciated that, in the present application, two cleaning motors 201 may be provided to drive the roller drive gear 203 and the screen brush drive gear 4 respectively, without other intermediate transmission gears, and no specific limitation is made herein.

In the above embodiment of the present application, the power assembly 2 includes the above-mentioned cleaning motor 201 and roller drive gear 203.

Optionally, as shown in Figs. 1, 2 and 3, a gear cover 7 is disposed on the side of the cleaning box 1 to close the power assembly 2, such that each of the gears is in a relatively closed working space to prevent the interference with the gear due to foreign matter caught on the gear.

In some embodiments of the present application, as shown in Fig. 9, the filter screen cleaning module 100 further includes a water inlet pipe 91, a water pump assembly 92, a water outlet control valve 93, and a drain pipe 94, wherein one end of the water inlet pipe 91 is connected with the water inlet 105, the other end of the water inlet pipe 91 is connected with the water pump assembly 92 for pumping down water from a water container and pumping up the water from the water inlet pipe 91 to the water inlet 105, the outlet control valve 93 is configured for controlling the water outlet 106 to be open or closed, the water outlet 106 is connected with the drain pipe 94, and water is discharged to a drain port of the water container through the drain pipe 94.

Optionally, the water outlet control valve 93 is connected with the drain pipe 91, and a water outlet control port of the water outlet control valve 93 is disposed dead against the drain port of the water container.

An air processing device 1000 according to an embodiment of the present application includes: the above-mentioned filter screen cleaning module 100, and the structure of the filter screen cleaning module 100 is not described herein.

The air processing device 1000 with the filter screen cleaning module 100 may wash the filter stably, is prevented from shaking and has good cleaning effects.

Herein, the air processing device 1000 may be configured as an indoor unit of an air conditioner, or a purifier, or other devices provided with a filter and a dust filter.

As shown in Fig. 2, in one specific example, the air processing device 1000 is configured as an indoor unit of an air conditioner, the filter screen cleaning module 100 is connected on the chassis 220 of the indoor unit of the air conditioner, and the filter screen cleaning module 100 is located above the drain pan 300 of the indoor unit of the air conditioner.

Specifically, as shown in Fig. 2, the top of the casing 200 of the indoor unit of the air conditioner has an air inlet 210, and the filter screen 400 is movably disposed at the air inlet 210. The casing 200 includes a chassis for fixing a heat exchanger and a fan.

As shown in Fig. 2, the chassis 220 includes a back plate 221 and a bottom plate 222, wherein the back plate 221 is arranged in the vertical direction, and the bottom plate 222 is connected in front of the bottom of the back plate 221. A rear end of the drain pan 300 is connected with the back plate 221, and a side of the drain pan 300 is connected with the bottom plate 222. The filter screen cleaning module 100 is connected with the back plate 221 and the drain pan 300 respectively.

The water pump assembly 92 is at the bottom of the filter screen cleaning module 100. The water pump assembly 92 includes a base, a drain port and a suction port, wherein the suction port is disposed at the bottom of the base, and the base is flush with an inner side surface at the bottom of the drain pan 300, which ensures that the water pump assembly 92 may suck water at a lower level in the drain pan 300. The drain port is connected with the water inlet pipe 91. The bottom of the drain pipe 94 is aligned with the drain port on the drain pan 300 for draining water.

In the present application, the "synchronization" of two moving members means that the two moving members have a certain relative relationship in unit time, the relative change in displacement, or in speed, or in frequency being consistent. More specifically, the "synchronous rotation" of the coaxial rotating members means that the moving direction, the rotational angular velocity, and the time of starting and stopping the rotation of the two moving members are the same.

The structure of the filter screen cleaning module 100 according to one embodiment of the present application will be described below in conjunction with Figs. 1-12.

As shown in Fig. 3, a filter screen cleaning module 100 includes: a cleaning box 1, a power assembly 2, a screen brush assembly 3, a screen brush drive gear 4, a dedusting member 5, a roller assembly 6, a gear cover 7, a chip filter member 8, an water inlet pipe 91, a water pump assembly 92, a water outlet control valve 93, and a drain pipe 94.

Specifically, as shown in Figs. 3, 9 and 12, the cleaning box 1 has a cleaning cavity 101 with an open upper end. The box wall of the cleaning box 1 is provided with a shaft hole 104. A water inlet 105 is arranged at the position of the upper portion of the cleaning box 1 higher than the shaft hole 104. A support wall 107 is arranged at the lower end of the cleaning box 1, and is provided thereon with a downward water outlet 106.

As shown in Figs. 1 to 4, and Figs. 8, 10 and 12, the roller assembly 6 is rollably connected between the two opposite box walls of the upper portion of the cleaning box 1. The roller assembly 6 includes the filter screen drive gear 61, the flexible contact drive portion 62 and the inner shaft 63 of the roller, wherein each of the end portions of the inner shaft 63 of the roller is connected with one filter screen drive gear 61, the inner shaft 63 of the roller is sleeved with the flexible contact drive portion 62, the outer peripheral wall of the inner shaft 63 of the roller is provided thereon with the rotation limiting groove 641, the inner peripheral wall of the cylindrical flexible contact drive portion 62 is provided thereon with the rotation limiting projection 642, and the rotation limiting projection 642 is inserted and fitted in the rotation limiting groove 641. The filter screen drive gear 61 is configured for being engaged with the filter screen 400 to drive the filter screen 400 to move, and the flexible contact drive portion 62 is configured for flexibly contacting with the filter screen 400 to drive the filter screen 400 to move. The bottom of the filter screen 400 is provided with a rib-like protrusion 401 which cooperates with the filter screen drive gear 61 and the flexible contact drive portion 62. As shown in Fig. 3, the filter screen raceway 65 is provided below the roller assembly 6, half surrounding the lower portion of the roller assembly 6.

As shown in Figs. 3-9, the screen brush assembly 3 is rollably connected between two opposite side walls of the cleaning box 1, for removing impurities on the filter screen 400. The screen brush assembly 3 includes: the screen brush inner shaft 310 and the screen brush body 320. The screen brush body 320 is disposed on the peripheral wall of the screen brush inner shaft 310, and the screen brush body 320 is configured to contact and clean the filter screen 400. The screen brush inner shaft 310 includes the inner shaft lower cover 311 and the inner shaft upper cover 312, which are snapped integrally and connected by screws. One end of the inner shaft lower cover 311 is formed with the engagement shaft 304, the other end of the inner shaft lower cover 311 is fitted with the inner shaft upper cover 312 to form an end hole 301, and the engagement shaft 304 is inserted into one shaft hole 104.

As shown in Figs. 3, 5 to 9, the screen brush drive gear 4 is located outside the cleaning box 1 to connect the power source, and is coaxially provided thereon with the screen brush connecting shaft 410. The screen brush connecting shaft 410 passes through another shaft hole 104, extends into the end hole 301 and rotates in synchronization with the screen brush assembly 3.

As shown in Figs. 3, 4 and 12, a dedusting member 5 is arranged below the screen brush assembly 3, and is provided thereon with a toothed plate which is in contact with the screen brush assembly 3. Comb teeth 51 are provided on the toothed plate, and both ends of the dedusting member 5 are snapped in the cleaning box 1.

As shown in FIG. 3, FIG. 11, and FIG. 12, a fixed position is arranged on the inner wall of the cleaning cavity 101 in the cleaning box 1, and the chip filter member 8 is located below the dedusting member 5. The chip filter member 8 is provided thereon with a grating plate 81 for blocking the flow of impurities in the water toward the water outlet 106. The chip filter member 8 is provided thereon with a snap-in portion 83 snapped at a fixed position. The lowest portion of the chip filter member 8 is aligned with the water outlet 106. The top abutting block 85 abutting against the dedusting member 5 is arranged on the upper portion of the chip filter member 8, and the bottom abutting block 85 abutting against the support wall 107 is arranged on the lower portion of the chip filter member 8.

As shown in Fig. 8, the power assembly 2 includes the cleaning motor 201, the roller drive gear 203, and the first and second transmission gears 71 and 72 for drive transmission, wherein the cleaning motor 201 drives the first transmission gear 71 to rotate, the first transmission gear 71 drives the second transmission gear 72 to rotate, and the second transmission gear 72 simultaneously drives the screen brush drive gear 4 and the roller drive gear 203 to rotate.

As shown in Figs. 1, 2, and 3, the gear cover 7 is disposed at the side of the cleaning box 1 to enclose the power assembly 2 in a space.

As shown in Fig. 9, one end of the water inlet pipe 91 is connected with the water inlet 105, and the other end of the water inlet pipe 91 is connected with the water pump assembly 92. The water pump assembly 92 is configured for pumping down water from the water container and pumping up water from the water inlet pipe 91 to the water inlet 105. The water outlet control valve 93 is configured for controlling the water outlet 106 to be open or closed, and the water outlet 106 is connected with the drain pipe 94, and water is discharged to a drain port of the water container through the drain pipe 94.

As shown in Fig. 2, for the air processing device 1000, the indoor unit of the air conditioner is taken as an example. The indoor unit of the air conditioner includes a casing 200, at the top of which, an air inlet 210 is arranged. A movable filter screen 400 is arranged at the air inlet 210. The casing 200 further includes the chassis 220 consisting of the back plate 221 and the bottom plate 222, wherein the back plate 221 is arranged in the vertical direction, and the bottom plate 222 is connected in front of the bottom of the back plate 221. A rear end of the drain pan 300 is connected with the a side of the drain pan 300 is connected with the bottom plate 222. The filter screen cleaning module 100 is connected with the back plate 221 and the drain pan 300 respectively, and the roller assembly 6 at the top of the filter screen cleaning module 100 is aligned with the filter screen 400.

In the cleaning work, the power assembly 2 drives the roller drive gear 203 and the screen brush drive gear 4 to rotate, the roller drive gear 203 drives the roller assembly 6 to rotate, the screen brush drive gear 4 drives the screen brush assembly 3 to rotate, and the filter screen 400 follows the roller assembly 6 to rotate and forms a rotational contact surface with the rotating filter assembly 3. The filter screen 400 is rotated on the surface of the roller assembly 6 and is driven in the filter screen raceway 65. The screen brush assembly 3 brushes the dust on the filter screen 400 to its surface, and during the rotation, the dust and hair on the surface are scraped off by the dedusting member 5.

At the same time, the water pump assembly 92 pumps down water from the drain pan 300, and pumps up water from the water inlet pipe 91 into the water inlet 105, such that the surface of the screen brush assembly 3 is wet and rinsed. The dirty water after washing carries the impurities and hair in the dedusting member 5 to the chip filter member 8, the hair is retained on the chip filter member 8, and the dirty water is discharged from the water outlet 106 to the drain pipe 94 which is aligned with the drain port of the drain pan 300, outside the air conditioner.

When the filter screen 400 is required to be reset, the cleaning motor 101 in the power assembly 2 is reversed to move the filter screen 400 in the direction opposite to the washing direction.

In the description of the present specification, reference throughout this specification to "an embodiment" and "an example" means that a particular feature, structure, material, or characteristic described in connection with the embodiment or example is included in at least one embodiment or example of the present application. In the specification, the schematic expressions to the above-mentioned terms are not necessarily referring to the same embodiment or example. Furthermore, the described particular features, structures, materials, or characteristics may be combined in any suitable manner in one or more embodiments or examples.

## Claims

1. A filter screen cleaning module (100), comprising:
a cleaning box (1), having a cleaning cavity (101), a shaft hole (103) being provided in a box wall of the cleaning box;
a screen brush assembly (3), rollably connected between two opposite box walls of the cleaning box, configured to remove impurities on a filter screen (400), and having at least one end surface provided with an end hole (301);
a screen brush drive gear (4), located outside the cleaning box to be connected with a power source, and coaxially provided with a screen brush connecting shaft (410), the screen brush connecting shaft passing through the shaft hole into the end hole and configured to rotate synchronously with the screen brush assembly;
**characterised in that**:
the cleaning box is provided with a water inlet (105) and a water outlet (106) which are in communication with the cleaning cavity (101); and
the screen brush assembly comprises a screen brush body (320) and a screen brush inner shaft (310), comprising:
an inner shaft lower cover (311) formed in an elongated shape; and
an inner shaft upper cover (312), formed in an elongated shape, which cooperates with an end of the inner shaft lower cover to form the end hole, a
screen brush connecting shaft (410)
passing through the inner shaft lower cover and being connected with the inner shaft upper cover.

2. The filter screen cleaning module according to claim 1, wherein a reinforcing structure is processed on the inner shaft lower cover and the inner shaft upper cover.

3. The filter screen cleaning module according to claim 1 or 2, wherein the screen brush connecting shaft (410)
is provided with an elastic buckle (411) snapped in the end hole.

4. The filter screen cleaning module according to any preceding claim, wherein the screen brush connecting shaft (410)
is provided with a flat portion (412), and the end hole is formed into a shape fitted with the screen brush connecting shaft. (410).

5. The filter screen cleaning module according to any preceding claim, wherein the screen brush assembly comprises:
a screen brush body (320), provided on a peripheral wall of the screen brush inner shaft, and configured to contact the filter screen, and
wherein the screen brush inner shaft (310), has two ends connected between the two opposite side walls of the cleaning box.

6. The filter screen cleaning module according to claim 5, wherein the screen brush body is formed into a cylindrical shape and fitted over the screen brush inner shaft, or the screen brush body in a sheet shape is bent and wrapped around the peripheral wall of the screen brush inner shaft.

7. The filter screen cleaning module according to claim 5 or 6, wherein the inner shaft lower cover (311) is provided with an inner shaft notch (302) and has a second end formed with an engagement shaft (304), the inner shaft upper cover (312) is disposed at the inner shaft notch, and the shaft hole is arranged in each of the two opposite side walls of the cleaning box, and the engagement shaft is inserted into one of the shaft holes.

8. The filter screen cleaning module according to claim 7, wherein an anti-rotation block (305) is arranged at each of two ends of the inner shaft upper cover in a length direction, and an inner wall of the inner shaft notch is provided with a corresponding anti-rotation groove (303).

9. The filter screen cleaning module according to any preceding claim, wherein the water outlet (106) is provided at the bottom of the cleaning box, the water inlet is arranged toward the screen brush assembly, and/or at least a part of the screen brush assembly is immersed in the cleaning cavity.

10. An air processing device (1000), comprising: a filter screen cleaning module (100) according to any one of claims 1 to 9.

11. The air processing device according to claim 10, wherein the air processing device is configured as an indoor unit of an air conditioner, the filter screen cleaning module is connected on a chassis (220) of the indoor unit of the air conditioner, and the filter screen cleaning module is located above a drain pan (94) of the indoor unit of the air conditioner.

## Patentansprüche

1. Filtersiebreinigungsmodul (100), umfassend:
einen Reinigungskasten (1), der einen Reinigungshohlraum (101) aufweist, wobei ein Wellenloch (103) in einer Kastenwand des Reinigungskastens bereitgestellt ist;
eine Siebbürstenanordnung (3), die rollfähig zwischen zwei gegenüberliegenden Kastenwänden des Reinigungskastens angeschlossen ist, dazu konfiguriert ist,
Verunreinigungen auf einem Filtersieb (400) zu entfernen und mindestens eine mit einem Stirnloch (301) versehene Stirnfläche aufweist;
ein Siebbürsten-Antriebszahnrad (4), das sich außerhalb des Reinigungskastens befindet, um an eine Leistungsquelle angeschlossen zu sein, und koaxial mit einer Siebbürstenanschlusswelle (410) versehen ist, wobei die Siebbürstenanschlusswelle durch das Wellenloch in das Stirnloch verläuft und dazu konfiguriert ist, sich synchron mit der Siebbürstenanordnung zu drehen;
**dadurch gekennzeichnet, dass**:
der Reinigungskasten mit einem Wassereinlass (105) und einem Wasserauslass (106) versehen ist, die mit dem Reinigungshohlraum (101) in Verbindung stehen; und
die Siebbürstenanordnung Folgendes umfasst: einen Siebbürstenkörper (320) und eine innere Siebbürstenwelle (310), umfassend:
eine untere Abdeckung (311) der inneren Welle, die in einer langgestreckten Form ausgebildet ist; und
eine obere Abdeckung (312) der inneren Welle, die in einer langgestreckten Form ausgebildet ist und mit einem Ende der unteren Abdeckung der inneren Welle zusammenwirkt, um das Stirnloch auszubilden, wobei eine Siebbürstenanschlusswelle (410) durch die untere Abdeckung der inneren Welle verläuft und an die obere Abdeckung der inneren Welle angeschlossen ist.

2. Filtersiebreinigungsmodul nach Anspruch 1, wobei eine Verstärkungsstruktur auf der unteren Abdeckung der inneren Welle und der oberen Abdeckung der inneren Welle verarbeitet ist.

3. Filtersieb-Reinigungsmodul nach Anspruch 1 oder 2, wobei die Siebbürstenanschlusswelle (410) mit einem elastischen Schnappverbinder (411) versehen ist, der in das Stirnloch geschnappt ist.

4. Filtersiebreinigungsmodul nach einem der vorangehenden Ansprüche, wobei die Siebbürstenanschlusswelle (410) mit einem flachen Abschnitt (412) versehen ist und das Stirnloch in einer an die Siebbürstenanschlusswelle (410) angepasste Form ausgebildet ist.

5. Filtersiebreinigungsmodul nach einem der vorangehenden Ansprüche, wobei die Siebbürstenanordnung Folgendes umfasst:
einen Siebbürstenkörper (320), der auf einer Umfangswand der inneren Siebbürstenwelle bereitgestellt ist und zum Kontakt mit dem Filtersieb konfiguriert ist, und
wobei die innere Siebbürstenwelle (310) zwei Enden aufweist, die zwischen den beiden gegenüberliegenden Seitenwänden des Reinigungskastens angeschlossen sind.

6. Filtersiebreinigungsmodul nach Anspruch 5, wobei der Siebbürstenkörper in einer zylindrischen Form ausgebildet ist und über die innere Siebbürstenwelle gepasst ist oder der Siebbürstenkörper in einer flächigen Form gebogen und um die Umfangswand der inneren Siebbürstenwelle gewickelt ist.

7. Filtersiebreinigungsmodul nach Anspruch 5 oder 6, wobei die untere Abdeckung (311) der inneren Welle mit einer Aussparung (302) der inneren Welle versehen ist und ein zweites Ende aufweist, das mit einer Eingriffswelle (304) ausgebildet ist, wobei die obere Abdeckung (312) der inneren Welle an der Aussparung der inneren Welle angeordnet ist und das Wellenloch in jeder der zwei gegenüberliegenden Seitenwände des Reinigungskastens angeordnet ist und die Eingriffswelle in eines der Wellenlöcher gesteckt ist.

8. Filtersiebreinigungsmodul nach Anspruch 7, wobei ein Drehverhinderungsklotz (305) an jedem von zwei Enden der oberen Abdeckung der inneren Welle in einer Längenrichtung angeordnet ist und eine innere Wand der Aussparung der inneren Welle mit einer entsprechenden Drehverhinderungsnut (303) versehen ist.

9. Filtersiebreinigungsmodul nach einem der vorangehenden Ansprüche, wobei der Wasserauslass (106) an dem Boden des Reinigungskastens bereitgestellt ist, der Wassereinlass in Richtung der Siebbürstenanordnung angeordnet ist und/oder mindestens ein Teil der Siebbürstenanordnung in dem Reinigungshohlraum versunken ist.

10. Luftaufbereitungsvorrichtung (1000), umfassend: ein Filtersiebreinigungsmodul (100) nach einem der Ansprüche 1 bis 9.

11. Luftaufbereitungsvorrichtung nach Anspruch 10, wobei die Luftaufbereitungsvorrichtung als Inneneinheit einer Klimaanlage konfiguriert ist, das Filtersiebreinigungsmodul an einem Gehäuse (220) der Inneneinheit der Klimaanlage angeschlossen ist und sich das Filtersiebreinigungsmodul über einer Ablaufwanne (94) der Inneneinheit der Klimaanlage befindet.

## Revendications

1. Module de nettoyage de tamis filtrant (100), comportant :
une boîte de nettoyage (1), ayant une cavité de nettoyage (101), un trou d'arbre (103) mis en œuvre dans une paroi de boîte de la boîte de nettoyage ;
un ensemble formant brosse de tamis (3), connecté par rotation entre deux parois de boîte opposées de la boîte de nettoyage, configuré pour éliminer les impuretés sur un tamis filtrant (400), et ayant au moins une surface d'extrémité comportant un trou d'extrémité (301) ;
un pignon d'entraînement de brosse de tamis (4), situé à l'extérieur de la boîte de nettoyage à des fins de connexion à une source d'alimentation, et comportant de manière coaxiale un arbre de connexion de brosse de tamis (410), l'arbre de connexion de brosse de tamis passant au travers du trou d'arbre jusque dans le trou d'extrémité et étant configuré pour tourner de manière synchrone avec l'ensemble formant brosse de tamis ;
**caractérisé en ce que** :
la boîte de nettoyage comporte une entrée d'eau (105) et une sortie d'eau (106) qui sont en communication avec la cavité de nettoyage (101) ; et
l'ensemble formant brosse de tamis comporte un corps de brosse de tamis (320) et un arbre intérieur de brosse de tamis (310), comportant :
un couvercle inférieur d'arbre intérieur (311) formé en une forme allongée ; et
un couvercle supérieur d'arbre intérieur (312), formé en une forme allongée, qui coopère avec une extrémité du couvercle inférieur d'arbre intérieur pour former le trou d'extrémité, un arbre de connexion de brosse de tamis (410) passant au travers du couvercle inférieur d'arbre intérieur et étant connecté au couvercle supérieur d'arbre intérieur.

2. Module de nettoyage de tamis filtrant selon la revendication 1, dans lequel une structure de renfort est mise en œuvre sur le couvercle inférieur d'arbre intérieur et le couvercle supérieur d'arbre intérieur.

3. Module de nettoyage de tamis filtrant selon la revendication 1 ou la revendication 2, dans lequel l'arbre de connexion de brosse de tamis (410) comporte une boucle élastique (411) encliquetée dans le trou d'extrémité.

4. Module de nettoyage de tamis filtrant selon l'une quelconque des revendications précédentes, dans lequel l'arbre de connexion de brosse de tamis (410) comporte une partie plate (412), et le trou d'extrémité est formé en une forme adaptée à l'arbre de connexion de brosse de tamis (410).

5. Module de nettoyage de tamis filtrant selon l'une quelconque des revendications précédentes, dans lequel l'ensemble formant brosse de tamis comporte :
un corps de brosse de tamis (320), mis en œuvre sur une paroi périphérique de l'arbre intérieur de brosse de tamis, et configuré pour entrer en contact avec le tamis filtrant, et
dans lequel l'arbre intérieur de brosse de tamis (310) a deux extrémités connectées entre les deux parois latérales opposées de la boîte de nettoyage.

6. Module de nettoyage de tamis filtrant selon la revendication 5, dans lequel le corps de brosse de tamis est formé en une forme cylindrique et adapté sur l'arbre intérieur de brosse de tamis, ou le corps de brosse de tamis en une forme de feuille est plié et enroulé autour de la paroi périphérique de l'arbre intérieur de brosse de tamis.

7. Module de nettoyage de tamis filtrant selon la revendication 5 ou la revendication 6, dans lequel le couvercle inférieur d'arbre intérieur (311) comporte une entaille d'arbre intérieur (302) et a une deuxième extrémité formée avec un arbre de mise en prise (304), le couvercle supérieur d'arbre intérieur (312) est disposé au niveau de l'entaille d'arbre intérieur, et le trou d'arbre est agencé dans chacune des deux parois latérales opposées de la boîte de nettoyage, et l'arbre de mise en prise est inséré dans l'un des trous d'arbre.

8. Module de nettoyage de tamis filtrant selon la revendication 7, dans lequel un bloc anti-rotation (305) est agencé au niveau de chacune des deux extrémités du couvercle supérieur d'arbre intérieur dans une direction allant dans le sens de la longueur, et une paroi intérieure de l'entaille d'arbre intérieur comporte une rainure anti-rotation correspondante (303).

9. Module de nettoyage de tamis filtrant selon l'une quelconque des revendications précédentes, dans lequel la sortie d'eau (106) est mise en œuvre au fond de la boîte de nettoyage, l'entrée d'eau est agencée vers l'ensemble formant brosse de tamis, et/ou au moins une partie de l'ensemble formant brosse de tamis est immergée dans la cavité de nettoyage.

10. Dispositif de traitement d'air (1000), comportant : un module de nettoyage de tamis filtrant (100) selon l'une quelconque des revendications 1 à 9.

11. Dispositif de traitement d'air selon la revendication 10, dans lequel le dispositif de traitement d'air est configuré sous la forme d'une unité intérieure d'un climatiseur, le module de nettoyage de tamis filtrant est connecté sur un châssis (220) de l'unité intérieure du climatiseur, et le module de nettoyage de tamis filtrant est situé au-dessus d'un bac de récupération (94) de l'unité intérieure du climatiseur.
